# EUROPÄISCHE PATENTSCHRIFT

(11) **EP 3 287 330 B1**
(45) Veröffentlichungstag und Bekanntmachung des Hinweises auf die Patenterteilung: **29.04.2020**
(21) Anmeldenummer: 17187087.6
(22) Anmeldetag: 21.08.2017
(51) Int. Cl.: B60R 25/0215

(54) **SPERRVORRICHTUNG FÜR EINE LENKSÄULE EINES KRAFTFAHRZEUGS UND LENKSÄULE MIT DER SPERRVORRICHTUNG**
BLOCKING DEVICE FOR THE STEERING COLUMN OF A MOTOR VEHICLE AND STEERING COLUMN WITH THE BLOCKING DEVICE
DISPOSITIF DE VERROUILLAGE POUR UNE COLONNE DE DIRECTION D'UN VÉHICULE AUTOMOBILE ET COLONNE DE DIRECTION POURVUE DE DISPOSITIF DE VERROUILLAGE

(30) Priorität: 23.08.2016 DE 102016115643
(43) Veröffentlichungstag der Anmeldung: 28.02.2018
(60) Teilanmeldung: 19219905.7
(73) Patentinhaber: HUF Hülsbeck & Fürst GmbH & Co. KG, 42551 Velbert (DE)
(72) Erfinder: Trischberger, Werner, 85229 Markt Indersdorf (DE)
(74) Vertreter: Bals, Rüdiger

(56) Entgegenhaltungen:
- EP-A1- 2 572 946
- EP-A1- 2 604 481
- EP-A2- 1 110 828
- EP-A2- 1 176 065
- WO-A1-2009/121895
- DE-A1-102007 047 595

## Beschreibung

Die vorliegende Erfindung betrifft eine Sperrvorrichtung zum Verriegeln einer Lenksäule eines Fahrzeugs, insbesondere eines Kraftfahrzeugs. Die Erfindung betrifft ferner eine Lenksäule mit einer Sperrvorrichtung.

Zum Verriegeln oder Entriegeln einer Lenksäule bzw. eines Lenkrades eines Fahrzeugs sind verschiedene Lösungen bekannt. Aus der DE 100 22 831 A1 ist eine Verriegelungseinrichtung für ein Kraftfahrzeug bekannt, bei welcher ein Sicherungselement den Sperrbolzen sichert, wobei das Sicherungselement mittels eines Antriebselements in eine Sperrposition zum Blockieren des Sperrbolzens bewegbar ist.

Aus der EP 0 844 154 A2 oder der DE 100 25 488 C2 geht hervor, dass mittels eines elektromotorischen Antriebes ein als Bolzen ausgebildeter Rastkörper in eine Öffnung der Lenksäule eingebracht wird, um die Lenksäule zu verriegeln. Die Drehbewegung des Elektromotors wird dabei in eine Längsbewegung des Bolzens umgesetzt. Über einen schneckenförmigen Antrieb des Bolzens wird eine schraubenlinienförmige Hubkurve bzw. eine Hubleitfläche mit konstanter oder variabler Steigung realisiert. Diese Lösungen erfordern jedoch einen relativ großen Bauraum.

Andere bekannte Lösungen für eine Vorrichtung zum Verriegeln oder Entriegeln einer Lenksäule eines Fahrzeugs sehen, wie in der DE 34 08 514 C1 dargestellt, zur Umsetzung der Drehbewegung in eine Längsbewegung des Bolzens ein ebenes Kurvengetriebe vor, bei dem drehbar gelagerte Nockenscheiben Sicherungshebelmechanismen in Gang setzen, die die Längsbewegung des Bolzens hervorrufen. Diese Lösungen weisen eine relativ flache Bauform auf, jedoch ist der Bolzen gegen unbeabsichtigtes Einrasten, bspw. aufgrund der Schwerkraft, von Materialermüdung oder Manipulationen durch unberechtigte Personen, nur unzureichend gesichert.

Die Druckschrift EP 2 572 946 A1 offenbart einen Verriegelungsschutz für eine elektrische Lenkverriegelung. Ferner ist die Schrift EP 1 110 828 A2 ebenfalls auf eine Verriegelungsvorrichtung für eine Lenkeinrichtung gerichtet, die über einen komplexen Aufbau verfügt.

Aufgabe der vorliegenden Erfindung ist es, die voranstehend beschriebenen Nachteile zumindest teilweise zu beheben. Insbesondere ist es Aufgabe der vorliegenden Erfindung, eine platzsparende sowie zuverlässig funktionierende Sperrvorrichtung sowie eine optimierte (platzsparende sowie zuverlässig funktionierende) Lenksäule mit einer Sperrvorrichtung zur Verfügung zu stellen.

Die voranstehende Aufgabe wird durch die Patentansprüche gelöst. Insbesondere wird die voranstehende Aufgabe durch die Sperrvorrichtung gemäß Anspruch 1 und die Lenksäule gemäß Anspruch 14 gelöst. Weitere Vorteile der Erfindung ergeben sich aus den Unteransprüchen, der Beschreibung und den Zeichnungen. Dabei gelten Merkmale, die im Zusammenhang mit der Sperrvorrichtung beschrieben sind, selbstverständlich auch im Zusammenhang mit der erfindungsgemäßen Lenksäule und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird eine Sperrvorrichtung zum Verriegeln einer Lenksäule oder dergleichen eines Fahrzeugs zur Verfügung gestellt. Die Sperrvorrichtung weist einen Grundkörper und einen Rastkörper auf. Der Rastkörper ist zum Verriegeln der Lenksäule in eine Sperrkranznut eines Sperrkranzes der Lenksäule bewegbar, wobei der Rastkörper in dem Grundkörper über eine Betätigungsbewegung in eine Sperrposition zum Verriegeln der Lenksäule und in eine Freigabeposition zum Freigeben der Lenksäule bewegbar gelagert ist. Die Sperrvorrichtung weist ferner eine Vorspannfeder auf, die den Rastkörper in Richtung der Sperrposition mit einer Federkraft beaufschlagt. Außerdem weist die Sperrvorrichtung eine Getriebeeinheit und eine Leiteinheit auf, die koaxial um eine Drehachse drehbar gelagert sind. Die Getriebeeinheit ist mit der Leiteinheit rotationsfest verbunden und die Leiteinheit ist mit dem Rastkörper zum Erzeugen der Betätigungsbewegung bzw. während des Erzeugens der Betätigungsbewegung wirkverbunden. Darüber hinaus ist die Leiteinheit in Längsrichtung der Drehachse zur Getriebeeinheit relativ verschiebbar angeordnet.

Anstelle der Lenksäule kann die erfindungsgemäße Sperrvorrichtung auch ein Bremspedal oder einen Gangschalthebel oder dergleichen im Fahrzeug, insbesondere zur Erhöhung der Diebstahlsicherheit, verriegeln, so dass die Begriffe: Lenksäule, Bremspedal und Gangschalthebel im Rahmen der vorliegenden Erfindung auch als Synonyme betrachtet werden können.

Insbesondere kann die erfindungsgemäße Sperrvorrichtung mit zumindest einem Antrieb versehen sein, wodurch der Rastköper automatisch zwischen seiner Freigabeposition (P2) und seiner Sperrposition (P1) hin und/oder her bewegbar ist. Der Antrieb kann dabei als ein Elektromotor ausgestaltet sein. Somit kann die Sperrvorrichtung insgesamt als eine elektromechanische Sperrvorrichtung ausgestaltet sein, die insbesondere frei von einem mechanischen Schließzylinder (gemeint ist: Schließzylinder frei) ausgestattet ist.

Getriebeeinheit und Leiteinheit sind vorliegend zweiteilig ausgestaltet, wodurch die relative Verschiebbarkeit der Leiteinheit zur Getriebeeinheit ermöglicht wird. Findet nun eine Wechselwirkung zwischen der Leiteinheit und dem Rastkörper statt, bspw. durch eine Kraftübertragung von dem Rastkörper auf die Leiteinheit, kann zumindest die Getriebeeinheit oder die Leiteinheit unbewegt bzw. ruhend in der Sperrvorrichtung positioniert bleiben. Dies schafft eine vorteilhafte Flexibilität bei der Ausnutzung des Bauraums der Sperrvorrichtung. Wären die Getriebeeinheit und die Leiteinheit fest miteinander verbunden, müsste die Sperrvorrichtung um eine Abstandslänge, um welche die Getriebeeinheit und die Leiteinheit bei einer Kraftübertragung des Rastkörpers auf die Leiteinheit voneinander beabstandet werden, höher bzw. größer gebaut werden. In der Praxis kann die Sperrvorrichtung durch die Zweiteiligkeit der Getriebeeinheit und der Leiteinheit um ca. 2 bis 4 mm niedriger bzw. kleiner gebaut werden. Dies kann im äußerst beengten Bereich einer Lenksäule von entscheidendem Vorteil sein.

Der Rastkörper sowie der Grundkörper bestehen bevorzugt aus Metall. Die Getriebeeinheit sowie die Leiteinheit bestehen bevorzugt aus Kunststoff. Durch den verwendeten Kunststoff können sowohl eine ausreichende Festigkeit für die gewünschte Kraftübertragung auf den Rastkörper als auch die stets zu erzielende Gewichtsreduzierung erzielt werden.

Die Vorspannfeder ist bevorzugt als Druckfeder in Form einer Schraubenfeder ausgestaltet. Dies schafft eine einfache und kostengünstige Lösung zum Aufbringen einer Federkraft auf den Rastkörper.

Unter der Drehachse ist vorliegend insbesondere eine wellen- bzw. zylinderförmige Drehachse zu verstehen, die zur koaxialen Lagerung der Getriebeeinheit und der Leiteinheit dient. Bei einer Drehung der Getriebeeinheit und/oder Leiteinheit ruht die Drehachse im Grundkörper.

Der Grundkörper fasst die Getriebeeinheit in Längsrichtung der Drehachse bevorzugt formschlüssig oder im Wesentlichen formschlüssig ein. Hierzu kann der Grundkörper zwei Schenkelabschnitte bzw. Schenkel aufweisen, wobei die Erfindung nicht darauf beschränkt ist. Anstelle der Schenkel kann die Getriebeeinheit selbstverständlich auch zwischen zwei anderen ersten und zweiten Grundkörperabschnitten positioniert sein. Die Getriebeeinheit und die Leiteinheit sind bevorzugt in einem Abschnitt zwischen den beiden Abschnitten oder Schenkeln des Grundkörpers auf der Drehachse, die sich entsprechend ebenfalls in diesem Abschnitt zwischen den beiden Schenkeln befindet, gelagert. Die Getriebeeinheit ist bevorzugt formschlüssig mit dem Grundkörper bzw. die beiden Schenkel des Grundkörpers kontaktierend angeordnet, wodurch die Bewegungsfreiheit der Getriebeeinheit in Längsrichtung der Drehachse eingeschränkt oder verhindert wird. Dadurch, dass die Getriebeeinheit passgenau zwischen den beiden Schenkeln des Grundkörpers angeordnet ist, kann die Stabilität der Sperrvorrichtung verbessert werden. Unter einer passgenauen Anordnung der Getriebeeinheit zwischen den beiden Schenkeln des Grundkörpers ist eine Einpassung zu verstehen, bei welcher die Getriebeeinheit bei Aufliegen auf einem Schenkel des Grundkörpers im Rahmen der technischen Möglichkeiten, bspw. weniger als 0,1 mm, vom anderen Schenkel des Grundkörpers beabstandet ist. Insbesondere durch die zweiteilige Ausgestaltung der Getriebeeinheit und der Leiteinheit ist es möglich, die Getriebeeinheit formschlüssig oder im Wesentlichen formschlüssig im Grundkörper zu lagern. Wären die Getriebeeinheit und die Leiteinheit integral bzw. einstückig als Einheit ausgestaltet, müsste zwischen dieser Einheit und dem Grundkörper in Längsrichtung der Drehachse ein zusätzlicher Spalt vorgesehen werden, in welchen die Einheit eine Ausweichbewegung bei einer Betätigungsbewegung durchführen kann. Befindet sich nämlich der Rastkörper nicht in einer für die Verriegelung vorgesehenen Öffnung der Lenksäule, liegt also an einem Bereich der Lenksäule zwischen zwei Öffnungen an, und wird die Einheit zum Verschieben des Rastkörpers in die Sperrposition um die Drehachse gedreht, könnte dies zu einer Blockade zwischen der Einheit und dem Rastkörper führen, wodurch die Sperrvorrichtung und/oder weitere Bauteile zum Ansteuern der Sperrvorrichtung beschädigt oder zerstört werden könnten.

Unter der Betätigungsbewegung ist eine Bewegung des Rastkörpers zu verstehen, bei welcher dieser in die Sperrposition oder die Freigabeposition bewegt bzw. verschoben wird. Der Rastkörper wird bevorzugt in einer Führung des Grundkörpers in die Sperrposition und die Freigabeposition geführt. In der Sperrposition ragt der Rastkörper bzw. ein Rastabschnitt des Rastkörpers über eine Außenfläche des Grundkörpers hinaus, sodass der Rastabschnitt in die Öffnung der Lenksäule greifen und dadurch dieselbe verriegeln kann. In der Freigabeposition befindet sich der Rastabschnitt im Grundkörper bzw. in der Führung des Grundkörpers und nicht mehr in der Öffnung der Lenksäule. Insbesondere befindet sich der Rastabschnitt in der Freigabeposition vollständig innerhalb des Grundkörpers bzw. in der Führung des Grundkörpers.

Die Leiteinheit ist bevorzugt derart mit dem Rastkörper wirkverbunden, dass die Leiteinheit durch den Rastkörper in Längsrichtung der Drehachse zur Getriebeeinheit relativ verschiebbar ist. Der Rastkörper befindet sich hierfür in direktem Kontakt zu der Leiteinheit. Zwischen dem Rastkörper und der Leiteinheit sind demnach keine Zwischenelemente nötig, um den Rastkörper zwischen der Sperrposition und der Freigabeposition hin und her zu bewegen. Somit kann die Sperrvorrichtung mit einer geringen Anzahl an Funktionsbauteilen und mithin entsprechend kostengünstig bereitgestellt werden. Der Rastkörper weist bevorzugt eine Nase auf, über welche die Leiteinheit mit dem Rastkörper zum Erzeugen der Betätigungsbewegung wirkverbunden, insbesondere direkt mechanisch kontaktierend wirkverbunden, ist. Die Nase des Rastkörpers ragt vorzugsweise orthogonal oder im Wesentlichen orthogonal zu einer Seitenfläche des Rastkörpers sowie zur Drehachse bzw. zur Längsrichtung der Drehachse in Richtung der Leiteinheit aus dem Rastkörper hervor. Durch die Nase kann der Rastkörper besonders vorteilhaft mit der Leiteinheit in Wirkverbindung gebracht werden.

Bei einer Betätigungsbewegung von der Freigabeposition in Richtung der Sperrposition kann es passieren, dass der Weg des Rastkörpers in Richtung der Sperrposition durch den Sperrkranz (Zahn auf Zahn Problematik) selber versperrt wird. Ist der Rastkörper in dieser Position angekommen, kann die Leiteinheit derart gegen den Rastkörper gedrückt werden, dass die Leiteinheit in Längsrichtung der Drehachse zur Getriebeeinheit relativ verschoben wird. Anschließend kann die Nase des Rastkörpers entlang einer Freilauffläche bis zu einem Abbremsen der Schneckenwelle bzw. des zugehörigen Antriebs geführt werden. Dadurch kann eine Blockade zwischen dem Rastkörper und der Leiteinheit platzsparend verhindert werden.

Die Lenksäule weist vorliegend nicht nur ein Lenkgestänge auf. Die Lenksäule umfasst insbesondere Funktionskomponenten für eine Übertragung von Lenkwinkeln und Lenkmomenten sowie zum Verriegeln der Lenksäule gegenüber einer Lenkbewegung durch ein Lenkrad.

Gemäß der vorliegenden Erfindung ist es möglich, dass bei einer Sperrvorrichtung die Leiteinheit eine zumindest abschnittsweise umlaufende und dabei in Längsrichtung der Drehachse ansteigende Hubleitfläche aufweist, die durch eine Drehung der Leiteinheit um die Drehachse zumindest abschnittsweise derart gegen eine Gegen-Hubleitfläche des Rastkörpers drückbar angeordnet ist, dass dadurch der Rastkörper in die Freigabeposition bewegbar ist. Die Hubleitfläche ist bevorzugt in Form einer Helix ausgestaltet, wobei die helixförmige Hubleitfläche einen Umfangsflächenabschnitt der Leiteinheit zumindest teilweise umläuft. Die Leiteinheit ist entsprechend als ein Kurvenrad mit der Hubleitfläche als Kurvenbahn ausgestaltet. Für die Betätigungsbewegung des Rastkörpers in die Freigabeposition liegt auf der Hubleitfläche insbesondere die Nase bzw. die Gegen-Hubleitfläche der Nase des Rastkörpers auf. Durch eine solche Hubleitfläche kann der Rastkörper besonders gleichmäßig und sicher in die Freigabeposition bewegt werden. Die Kraft, die während der Betätigungsbewegung des Rastkörpers von der Sperrposition in die Freigabeposition durch die Hubleitfläche der Leiteinheit auf die Gegen-Hubleitfläche des Rastkörpers aufgebracht wird ist selbstverständlich größer als die Federkraft der Vorspannfeder, die dieser Kraft entgegenwirkt. Die Steigung der Hubleitfläche beträgt bevorzugt eine Höhe zwischen 4 und 12 mm, insbesondere zwischen 7 und 9 mm.

Außerdem kann es im Rahmen der vorliegenden Erfindung von Vorteil sein, wenn bei einer Sperrvorrichtung die Gegen-Hubleitfläche des Rastkörpers in Längsrichtung der Drehachse zumindest abschnittsweise eine Steigung aufweist. Dadurch liegt die Gegen-Hubleitfläche bei einer Betätigungsbewegung des Rastkörpers von der Sperrposition in die Freigabeposition nicht nur an einem Endbereich der Gegen-Hubleitfläche an der Hubleitfläche an. Würde die Gegen-Hubleitfläche bei einer Betätigungsbewegung des Rastkörpers von der Sperrposition in die Freigabeposition nur an einem Endbereich der Gegen-Hubleitfläche an der Hubleitfläche anliegen, könnte sich der Rastkörper im Grundkörper bzw. in der Führung des Grundkörpers verkanten oder zumindest schwergängiger hin und her bewegt werden. Die Steigung der Gegen-Hubleitfläche entspricht dabei bevorzugt der Steigung oder im Wesentlichen der Steigung der Hubleitfläche. D.h., die Steigung der Hubleitfläche und die Steigung der Gegen-Hubleitfläche verlaufen bei einer Kontaktierung miteinander bevorzugt zumindest abschnittsweise parallel oder im Wesentlichen parallel zueinander. Somit kann ein zumindest abschnittsweise flächiger Kontakt zwischen der Hubleitfläche und der Gegen-Hubleitfläche geschaffen werden, durch welchen die Kraft von der Leiteinheit bzw. der Hubleitfläche besonders gleichmäßig auf den Rastkörper bzw. die Gegen-Hubleitfläche übertragen werden kann. Hierbei kann es von Vorteil sein, wenn die Gegen-Hubleitfläche eine konvexe Wölbung in Richtung der Hubleitfläche aufweist, wobei der Scheitel der Wölbung in einem mittleren Bereich der Gegen-Hubleitfläche ausgestaltet ist. Dadurch kann eine Kraft von der Hubleitfläche bei der Betätigungsbewegung von der Sperrposition in die Freigabeposition möglichst zentral auf eine entsprechend ausgestaltete Gegen-Hubleitfläche einer Nase des Rastkörpers übertragen werden. Ferner kann dadurch ein Verkanten oder zu starkes Schleifen des Rastkörpers im Grundkörper bzw. in der Führung des Grundkörpers bei der Betätigungsbewegung von der Sperrposition in die Freigabeposition reduziert oder verhindert werden. Dabei ist es von Vorteil, wenn die konvexe Wölbung derart geformt ist, dass bei der Betätigungsbewegung von der Sperrposition ein Linienkontakt oder im Wesentlichen ein Linienkontakt zwischen der Gegen-Hubleitfläche und der Hubleitfläche herstellbar ist. Eine sphärische Wölbung der Gegen-Hubleitfläche sollte demnach vermieden werden.

Darüber hinaus ist es erfindungsgemäß möglich, dass bei einer Sperrvorrichtung die Gegen-Hubleitfläche, insbesondere in einem Endabschnitt der Gegen-Hubleitfläche, eine konvexe Krümmung aufweist. Durch die konvexe Krümmung bzw. Wölbung im Endabschnitt der Gegen-Hubleitfläche kann die Gegen-Hubleitfläche nach Verlassen der Hubleitfläche bei einer Betätigungsbewegung von der Sperrposition in die Freigabeposition mit einem geringeren Reibungswiederstand auf einer oberen Freilauffläche der Leiteinheit, die direkt auf die Hubleitfläche folgt, bewegt bzw. verschoben werden. Ohne eine solche konvexe Krümmung könnte eine möglicherweise zu scharfe Kante im unteren Endbereich der Gegen-Hubleitfläche die Hubleitfläche verkratzen und somit beschädigen oder zerstören.

Gemäß der vorliegenden Erfindung ist es bei einer Sperrvorrichtung möglich, dass die Hubleitfläche die Leiteinheit in einem Bereich zwischen 90° und 270°, bevorzugt in einem Bereich zwischen 150° und 200° umläuft. Über diese Strecke kann, bspw. bei der vorstehend angegebenen Höhe der Hubleitfläche von 7 bis 9 mm die Steigung der Hubleitfläche flach genug gehalten werden, um eine schädliche Kraftentwicklung auf die Leiteinheit zu vermeiden. Im Rahmen der vorliegenden Erfindung hat sich herausgestellt, dass hierfür besonders eine Hubleitfläche, die über eine Länge von 170° bis 250° die Leiteinheit umläuft, geeignet ist. Darunter, dass die Hubleitfläche die Leiteinheit in einem Bereich zwischen 170° und 250° umläuft, ist zu verstehen, dass die Hubleitfläche die Leiteinheit bspw. über 170° oder über 250° umläuft. D. h., die Leiteinheit bildet eine Helix um einen zylinderförmigen Umfangsflächenabschnitt der Leiteinheit über bspw. 170°, 250° oder einen Wert dazwischen.

Bei einer erfindungsgemäßen Sperrvorrichtung kann es weiterhin von Vorteil sein, wenn die Leiteinheit eine in Längsrichtung der Drehachse ansteigende Einlaufschräge aufweist, wobei der Rastkörper in der Freigabeposition derart angeordnet ist, dass die Einlaufschräge durch eine Drehung der Leiteinheit um die Drehachse gegen den Rastkörper, insbesondere gegen eine Gegen-Einlaufschräge des Rastkörpers, kontaktierbar ist und dadurch die Leiteinheit in Längsrichtung der Drehachse zur Getriebeeinheit relativ verschiebbar ist. Durch die Steigung der Einlaufschräge können nicht nur der gewünschte Hub der Leiteinheit und eine Beabstandung von der Getriebeeinheit realisiert, sondern auch ungewünschte Reibungskräfte und Scherwirkungen zwischen der Leiteinheit und dem Rastkörper verringert oder verhindert werden. Zusätzlich oder alternativ kann auch der Rastkörper eine in Längsrichtung der Drehachse ansteigende Gegen-Einlaufschräge aufweisen, wobei der Rastkörper in der Freigabeposition derart angeordnet ist, dass die Gegen-Einlaufschräge durch eine Drehung der Leiteinheit um die Drehachse gegen die Leiteinheit, insbesondere gegen eine Einlaufschräge, kontaktierbar ist und dadurch die Leiteinheit in Längsrichtung der Drehachse zur Getriebeeinheit relativ verschiebbar ist. Die Einlaufschräge und die Gegen-Einlaufschräge sind bevorzugt derart ausgestaltet, dass sie bei einer Kontaktierung miteinander zumindest abschnittsweise parallel oder im Wesentlichen parallel zueinander angeordnet sind. Dadurch bilden die Einlaufschräge und die Gegen-Einlaufschräge zumindest abschnittsweise besonders widerstandsarme Gleitflächen. Materialabrieb, insbesondere seitens des Leitelements, das vorzugsweise aus Kunststoff besteht, kann damit verringert oder im Wesentlichen verhindert werden.

Bei der vorliegenden Erfindung kann der Rastkörper einen Gleitabschnitt aufweisen, der, zumindest in der Sperrposition, der Leiteinheit zugewandt ist und eine komplementär oder im Wesentlichen komplementär zu einem mittleren Umfangsflächenabschnitt der Leiteinheit ausgestaltete konkave Krümmung aufweist. Die Leiteinheit kann bei einer Kraftübertragung auf den Rastkörper dadurch besonders reibungsarm und entsprechend verschleißfrei am Rastkörper entlang bewegt werden. Der Gleitabschnitt ist bevorzugt zwischen der Gegen-Einlaufschräge und der Gegen-Hubleitfläche sandwichartige ausgestaltet. Ferner bildet der Gleitabschnitt einen Außenwandabschnitt der Nase des Rastkörpers. Abgesehen vom Rastabschnitt sind die wesentlichen Funktionsflächen des Rastkörpers in diesem Fall vollständig an der Nase des Rastkörpers ausgestaltet. Die Nase bildet einen relativ kleinen Teil des Rastkörpers. Dadurch kann der Rastkörper und entsprechend die Sperrvorrichtung besonders einfach und kostengünstig hergestellt werden.

Weiterhin ist es bei einer erfindungsgemäßen Sperrvorrichtung möglich, dass die Hubleitfläche in Umfangsrichtung der Leiteinheit zwischen einer oberen Freilauffläche und einer unteren Freilauffläche der Leiteinheit ausgestaltet ist, wobei die obere Freilauffläche sowie die untere Freilauffläche in Umfangsrichtung der Leiteinheit jeweils in einer Ebene oder im Wesentlichen in einer Ebene verlaufen und zum Lagern eines Rastkörperabschnitts ausgestaltet sind, wobei die obere Freilauffläche und die untere Freilauffläche jeweils über eine Länge von 150° bis 220° in Umfangsrichtung der Leiteinheit ausgestaltet sind. Dass die obere Freilauffläche und die untere Freilauffläche jeweils über eine Länge von 150° bis 220° in Umfangsrichtung der Leiteinheit ausgestaltet sind bedeutet, dass die obere Freilauffläche und die untere Freilauffläche jeweils über bspw. 150°, 220° oder einen Wert dazwischen in Umfangsrichtung der Leiteinheit ausgestaltet sind. Die obere und untere Freilauffläche dienen jeweils für einen erforderlichen Auslauf des Rastkörperabschnitts, bspw. der Nase des Rastkörpers. Über den Rastkörperabschnitt und die Hubleitfläche wird bei der Betätigungsbewegung des Rastkörpers die Drehbewegung der Getriebeeinheit und der Leiteinheit in eine Linearbewegung des Rastkörpers überführt. Die Bewegung des Rastköperabschnitts kann jedoch nicht schlagartig am Ende der Betätigungsbewegung enden. Aufgrund der Bauteilträgheit und anderen technischen Rahmenbedingungen ist es erforderlich, für den Rastkörperabschnitt, der auf der Hubleitfläche bewegt wird, einen Auslauf bzw. Freilauf zu schaffen. Im Rahmen der vorliegenden Erfindung hat sich nicht nur herausgestellt, dass eine Freilauffläche von 150° bis 220° besonders zuverlässig gegen einen zu vermeidenden Anschlag des Rastkörperabschnitts an der Leiteinheit hilft, sondern im Rahmen der erfindungsgemäßen Sperrvorrichtung auch umsetzbar ist. Über diese Länge kann sichergestellt werden, dass der Freilauf des Rastkörperabschnitts größer bzw. länger als der Bremsweg des Rastkörperabschnitts ist. Die Ebenen, in welchen die obere Freilauffläche und die untere Freilauffläche jeweils verlaufen liegen orthogonal oder im Wesentlichen orthogonal zur Drehachse. D.h., die Drehachse bildet zu diesen Ebenen einen Normalenvektor. Dadurch kann der Rastkörper im Freilauf keine Betätigungsbewegung durchführen.

Außerdem ist es gemäß der vorliegenden Erfindung möglich, dass bei einer Sperrvorrichtung ein Endabschnitt der Einlaufschräge und ein Endabschnitt der Hubleitfläche jeweils an die obere Freilauffläche angrenzen. Sowohl das Ende der Einlaufschräge als auch das Ende der Hubleitfläche können bspw. als Teil oder innerhalb eines Kragenabschnitts der Leiteinheit ausgestaltet sein, wobei eine Oberfläche des Kragenabschnitts die obere Freilauffläche bildet. Das Ende der Einlaufschräge und das Ende der Hubleitfläche befinden sich somit bezüglich der Längsrichtung der Drehachse auf gleicher Höhe bzw. in einer Ebene, die orthogonal zur Längsachse verläuft. Bei einer solchen Ausgestaltung wird die maximale Höhe der Sperrvorrichtung relativ gering gehalten.

Von weiterem Vorteil kann es sein, wenn bei einer erfindungsgemäßen Sperrvorrichtung die Getriebeeinheit einen Zapfenabschnitt aufweist, der in einer komplementären Durchgangsöffnung der Leiteinheit angeordnet ist, wobei insbesondere der Zapfenabschnitt einen kantigen oder eliptischen Querschnitt aufweist. Dadurch kann auf einfache und kostengünstige Weise eine rotationsfeste bzw. drehmomentfeste Verbindung zwischen der Getriebeeinheit und der Leiteinheit geschaffen werden. Der Zapfenabschnitt ist bevorzugt mit einem rechteckigen, insbesondere quadratischen oder im Wesentlichen quadratischen Querschnitt ausgestaltet. Eine solche Form ist besonders einfach und kostengünstig herzustellen und bietet eine vorteilhafte Kraftübertragungsmöglichkeit. Für eine vorteilhafte Kraft- bzw. Drehmomentübertragung kann der Zapfenabschnitt auch mit einer Mehrzahl von Nuten bzw. Vorsprüngen stern- oder kreuzförmig ausgestaltet sein bzw. einen entsprechenden Querschnitt aufweisen. Durch eine Zapfenform mit einem eliptischen Querschnitt kann ein Verschleiß, der bei einer Drehmomentübertragung an einer Kante des kantigen Zapfenabschnitts entstehen kann, verringert werden.

Hierbei kann es von Vorteil sein, wenn bei einer erfindungsgemäßen Sperrvorrichtung ein Spiel zwischen dem Zapfenabschnitt und der Durchgangsöffnung in einem Bereich zwischen 0,5 und 0,05 mm, insbesondere zwischen 0,2 und 0,08 mm, liegt. Dadurch kann sowohl eine ausreichend direkte Kraftübertragung zwischen der Getriebeeinheit und der Leiteinheit als auch ein möglichst reibungsarmes Verschieben der Leiteinheit zur Getriebeeinheit realisiert werden.

Bei einer Weiterbildung der vorliegenden Erfindung ist es außerdem möglich, dass die Getriebeeinheit ein Zahnrad aufweist, das einstückig oder integral mit dem Zapfenabschnitt ausgestaltet ist. Umso weniger separate Bauteile benötigt werden, desto einfacher, schneller und kostengünstiger kann ein Zusammenbau der Sperrvorrichtung durchgeführt werden. Eine integrale bzw. einstückige oder monolithische Einheit aus Zapfenabschnitt und Zahnrad bietet außerdem eine besonders sichere und direkte Kraftübertragung von der Getriebeeinheit auf die Leiteinheit. Über das Zahnrad kann die Getriebeeinheit besonders einfach angetrieben werden.

Gemäß eines weiteren Aspekts der vorliegenden Erfindung wird eine Lenksäule für ein Fahrzeug, insbesondere ein Kraftfahrzeug, mit einer vorstehend im Detail beschriebenen Sperrvorrichtung zur Verfügung gestellt. Die Lenksäule weist hierbei nicht nur ein Lenkgestänge auf. Vielmehr umfasst die vorliegende Lenksäule auch Funktionskomponenten wie die erfindungsgemäße Sperrvorrichtung. Damit bringt die erfindungsgemäße Lenksäule die gleichen Vorteile mit sich, wie sie ausführlich mit Bezug auf die erfindungsgemäße Sperrvorrichtung beschrieben worden sind.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Es zeigen jeweils schematisch:
- Figur 1: eine Sperrvorrichtung gemäß einer erfindungsgemäßen Ausführungsform in einem ersten Betriebszustand,
- Figur 2: die erfindungsgemäße Sperrvorrichtung in einem weiteren Betriebszustand,
- Figur 3: eine Detaildarstellung einer Leiteinheit der erfindungsgemäßen Sperrvorrichtung,
- Figur 4: die in Fig. 3 dargestellte Leiteinheit in einem Querschnitt,
- Figur 5: eine Detaildarstellung eines Rastkörper der erfindungsgemäßen Sperrvorrichtung in einer Seitenansicht,
- Figur 6: den in Figur 5 dargestellten Rastkörper in einer Vorderansicht,
- Figur 7: den in Figur 5 dargestellten Rastkörper in einer Draufsicht,
- Figur 8: die erfindungsgemäße Sperrvorrichtung in einem weiteren Betriebszustand,
- Figur 9: die erfindungsgemäße Sperrvorrichtung in einem weiteren Betriebszustand,
- Figur 10: die erfindungsgemäße Sperrvorrichtung in einem weiteren Betriebszustand,
- Figur 11: die erfindungsgemäße Sperrvorrichtung in einem weiteren Betriebszustand,
- Figur 12: die erfindungsgemäße Sperrvorrichtung in einem weiteren Betriebszustand,
- Figur 13: die erfindungsgemäße Sperrvorrichtung in einem weiteren Betriebszustand,
- Figur 14: eine Lenksäule gemäß einer erfindungsgemäßen Ausführungsform, und
- Figur 15: ein Kraftfahrzeug mit einer erfindungsgemäßen Lenksäule.

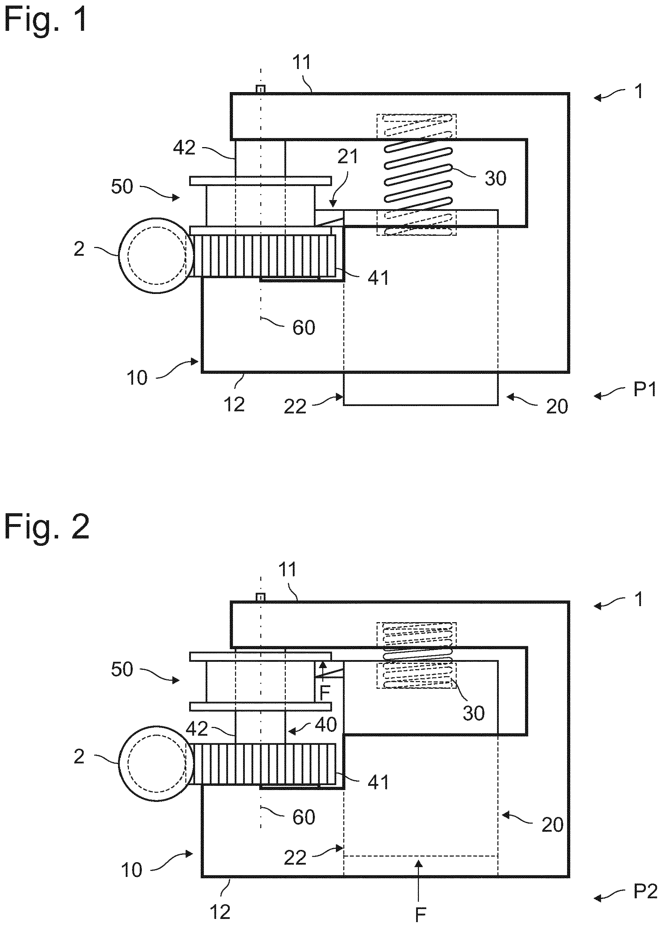

Elemente mit gleicher Funktion und Wirkungsweise sind in den Figuren 1 bis 15 jeweils mit denselben Bezugszeichen versehen.

Figur 1 zeigt eine Sperrvorrichtung 1 zum Verriegeln einer Lenksäule 100 eines Fahrzeugs 1000, insbesondere eine Kraftfahrzeugs. In den Figuren sind zur besseren Verständlichkeit sichtbare Linien mit unterschiedlicher Strichstärke dargestellt. Ferner sind verdeckte Linien nur ausgewählt dargestellt.

Die Sperrvorrichtung 1 weist einen Grundkörper 10 mit einem ersten Schenkel 11 und einem zweiten Schenkel 12 auf. Die Sperrvorrichtung 1 weist ferner einen Rastkörper 20 auf, der zum Verriegeln der Lenksäule 100 in eine Sperrkranznut 111 eines Sperrkranzes 110 der Lenksäule 100 bewegbar ist. Genauer gesagt ist zur Verriegelung der Lenksäule 100 ein Rastabschnitt 22 des Rastkörpers 20 in die Sperrkranznut 111 bewegbar. Der Rastkörper 20 ist in dem Grundkörper 10 über eine Betätigungsbewegung in eine Sperrposition P1 zum Verriegeln der Lenksäule 100 und in eine Freigabeposition P2 zum Freigeben der Lenksäule 100 bewegbar gelagert.

Außerdem weist die Sperrvorrichtung 1 eine als Schraubenfeder ausgestaltete Vorspannfeder 30 auf, die den Rastkörper 20 in Richtung der Sperrposition P1 mit einer Federkraft beaufschlagt. Darüber hinaus weist die Sperrvorrichtung 1 eine Getriebeeinheit 40 und eine Leiteinheit 50 auf, die koaxial um eine Drehachse 60 drehbar gelagert sind. Die Getriebeeinheit 40 weist ein Zahnrad 41 und einen Zapfenabschnitt 42 auf, wobei das Zahnrad 41 und der Zapfenabschnitt einstückig ausgestaltet sind. Das Zahnrad steht mit einer Schneckenwelle 2 in Wirkverbindung. Der Zapfenabschnitt 42, der ein Vierkantprofil aufweist, ist in einer komplementären Durchgangsöffnung 55 der Leiteinheit 50 angeordnet. Ein Spiel zwischen dem Zapfenabschnitt 42 und der Durchgangsöffnung 55 beträgt ca. 0,1 mm. Die Getriebeeinheit 40 ist annähernd formschlüssig zwischen dem ersten Schenkel 11 und dem zweiten Schenkel 12 eingepasst bzw. vom ersten Schenkel 11 und zweiten Schenkel 12 entsprechend passgenau umfasst.

Die Getriebeeinheit 40 ist über den Zapfenabschnitt 41 mit der Leiteinheit 50 rotationsfest verbunden. Ferner ist die Leiteinheit 50 mit dem Rastkörper 20 zum Erzeugen der Betätigungsbewegung über eine Nase 21 des Rastkörpers 20 wirkverbunden.

Figur 2 zeigt die Sperrvorrichtung 1 in einem Betriebszustand, der in der Praxis zwar grundsätzlich nicht auftritt, zur Verdeutlichung der Lagerung der Getriebeeinheit 40 und der Leiteinheit 50 an dieser Stelle jedoch ergänzend dargestellt werden soll. In Fig. 2 wird eine Kraft F auf den Rastabschnitt 22 in Richtung der Vorspannfeder 30 ausgeübt. Dadurch wird der Rastkörper 20 in einer Führung des Grundkörpers 10 in Richtung der Vorspannfeder 30 verschoben und drückt diese zusammen. Hierbei nimmt der Rastkörper 20 über die Nase 21 die Leiteinheit 50 mit, und verschiebt diese in Längsrichtung der Drehachse 60 relativ zur Getriebeeinheit 40.

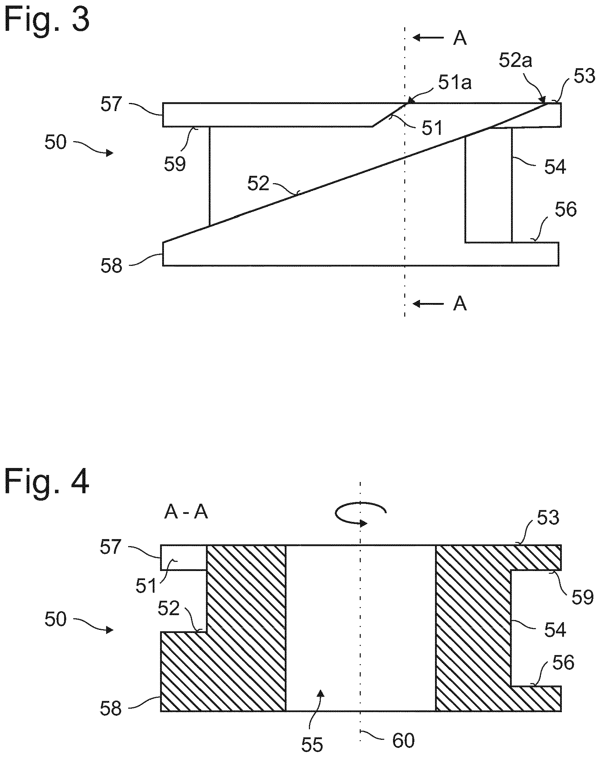

In Figur 3 und Figur 4 ist die Leiteinheit 50 im Detail dargestellt. Wie in Figur 3 gezeigt, weist die Leiteinheit 50 beispielsweise eine abschnittsweise umlaufende und dabei in Längsrichtung der Drehachse 60 ansteigende helixförmige Hubleitfläche 52 auf. Ferner weist die Leiteinheit einen rippenförmigen oberen Kragenabschnitt 57 und einen rippenförmigen unteren Kragenabschnitt 58 auf, wobei zwischen dem oberen Kragenabschnitt 57 und dem unteren Kragenabschnitt 58 ein mittlerer Umfangsflächenabschnitt 54 ausgestaltet ist. Die Hubleitfläche 52 verläuft von einer Oberseite des untere Kragenabschnitts 58 bzw. einer unteren Freilauffläche 56 durch den oberen Kragenabschnitt 57 hindurch bis hin zu einer Oberseite des oberen Kragenabschnitts 57 bzw. zu einer oberen Freilauffläche 53. Weiterhin weist die Leiteinheit 50 eine Einlaufschräge 51 auf, wobei ein Endabschnitt 51a der Einlaufschräge 51 und ein Endabschnitt 52a der Hubleitfläche 52 jeweils an die obere Freilauffläche 53, die sich um ca. 250° um ein oberes Ende der Durchgangsöffnung 55 herum erstreckt, angrenzen. Auf einer Unterseite weist der obere Kragenabschnitt 57 eine mittlere Freilauffläche 59 auf, die sowohl an die Einlaufschräge 51 als auch an den mittleren Umfangsflächenabschnitt 54 angrenzt. Die Hubleitfläche 52 umläuft die Leiteinheit 50 bzw. den Umfangsflächenabschnitt 54 über eine Länge von ca. 180°. Die untere Freilauffläche 56 umläuft die Leiteinheit 50 bzw. den Umfangsflächenabschnitt 54 über eine Länge von ca. 200°. Die obere Freilauffläche 53 sowie die untere Freilauffläche 56 verlaufen, wie in Figur 3 dargestellt, in Umfangsrichtung der Leiteinheit 50 jeweils in einer Ebene oder im Wesentlichen in einer Ebene.

In Figur 4 ist die Leiteinheit 50 in einem Querschnitt dargestellt, in welchem insbesondere die Durchgangsöffnung 55 sowie die Einlaufschräge 51 erkennbar sind.

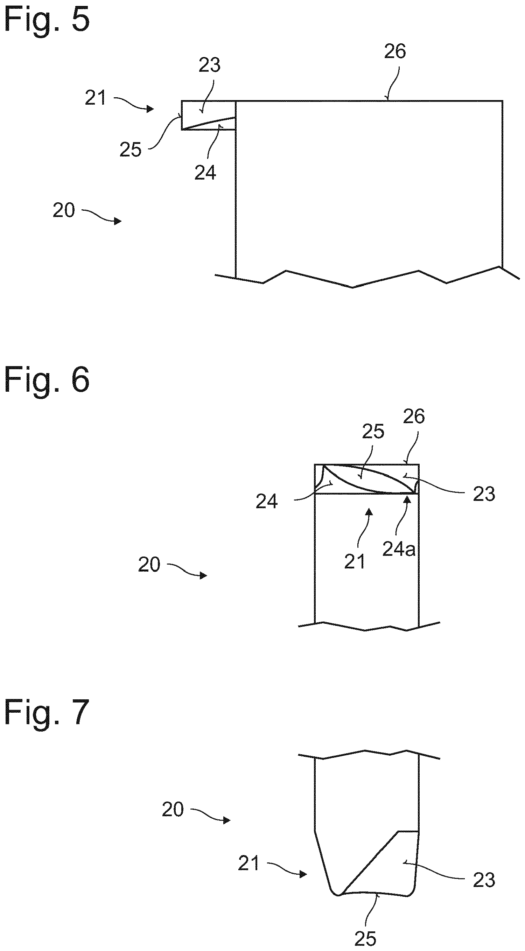

Mit Bezug auf die Figuren 5 bis 7 wird anschließend der Rastkörper 20 im Detail beschrieben. Wie in Figur 5 dargestellt, weist der Rastkörper 20 eine Stirnseite 26 und eine Nase 21 auf. Die Nase 21 weist einen vorderen Gleitabschnitt 25, eine Gegen-Einlaufschräge 23 und eine Gegen-Hubleitfläche 24 auf.

Wie in Figur 6 in einer Vorderansicht des Rastkörpers 20 dargestellt, weist die Gegen-Hubleitfläche 24 einen Endabschnitt 24a auf, der eine konvexe Krümmung in Richtung des Rastabschnitts 22 aufweist. Außerdem ist in Figur 6 eine Steigung der Gegen-Hubleitfläche 24 in Längsrichtung der Drehachse 60 gezeigt.

Aus Figur 7 geht hervor, dass der Gleitabschnitt 25 eine konkave Krümmung aufweist, die komplementär oder im Wesentlichen komplementär zum mittleren Umfangsflächenabschnitt 54 der Leiteinheit 50 ausgestaltet ist.

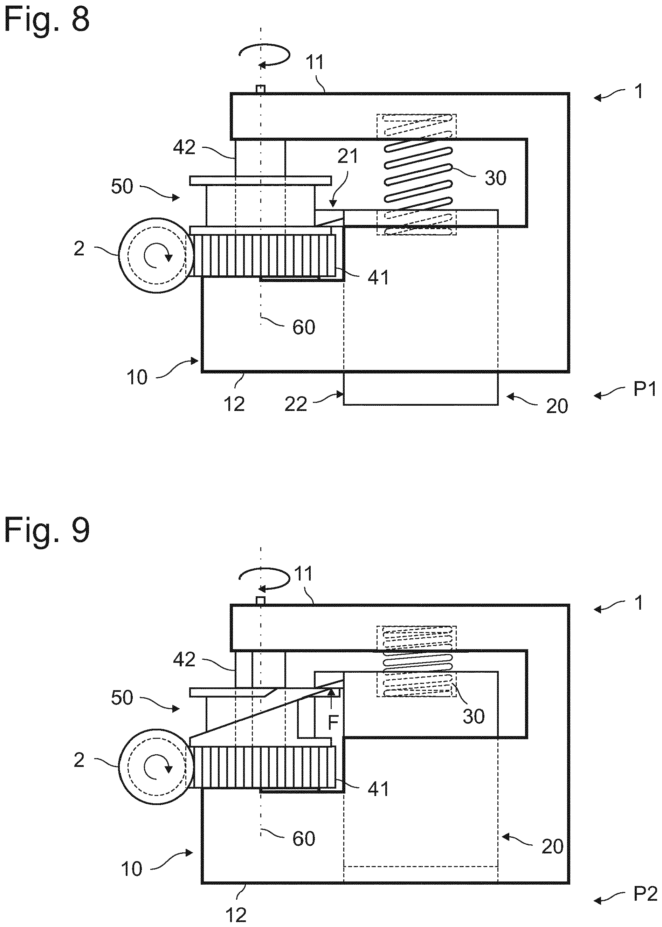

Mit Bezug auf die Figuren 8 bis 13 werden anschließend verschiedene Betriebszustände der Sperrvorrichtung 1 beim Verriegeln der Lenksäule 100 beschrieben.

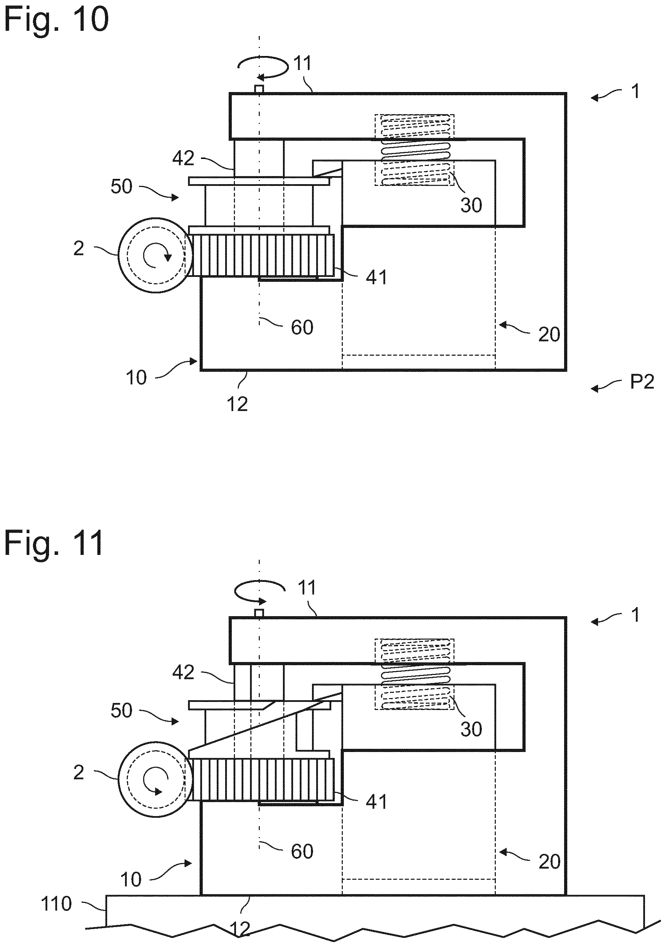

In Figur 8 ist ein Betriebszustand dargestellt, in welchem die Schneckenwelle 2 im Uhrzeigersinn gedreht wird. Dadurch werden die Getriebeeinheit 40 und mithin auch die Leiteinheit 50 gedreht. In dem in Figur 8 dargestellten Fall wird sich die Nase 21 des Rastkörpers 20 zunächst zumindest kurz auf der unteren Freilauffläche 56 bewegen. Durch eine weitere Drehung der Leiteinheit 50 um die Drehachse 60 wandert die Nase 21 bzw. die Gegen-Hubleitfläche 24 auf die Hubleitfläche 52. Wie in Figur 9 dargestellt, wird die Hubleitfläche 52 hierbei derart gegen eine Gegen-Hubleitfläche 24 des Rastkörpers 20 gedrückt, dass dadurch der Rastkörper 20 in die Freigabeposition P2 bewegt wird. Am Ende dieser Bewegung liegt die Nase 21 bzw. der Endabschnitt 24a der Gegen-Hubleitfläche 24, wie in Figur 10 dargestellt, auf der oberen Freilauffläche 53 auf. Dort kann die Nase 21 bis zu einem Abbremsen der Schneckenwelle 2 bzw. eines zugehörigen Antriebs geführt werden. Für den Fall, dass sich zwischenzeitlich eine Position des Sperrkranzes 110 bzw. einer Sperrkranznut 111 nicht verändert hat, kann dieser Ablauf in analoger Weise Rückwärts durchgeführt werden.

In den Figuren 11 bis 13 ist ein Fall dargestellt, in welchem sich der Sperrkranz 110 in einer Position befindet, in der sich der Rastkörper 20 nicht über einer Sperrkranznut 111, sondern über einem Bereich zwischen zwei Sperrkranznuten 111 befindet.

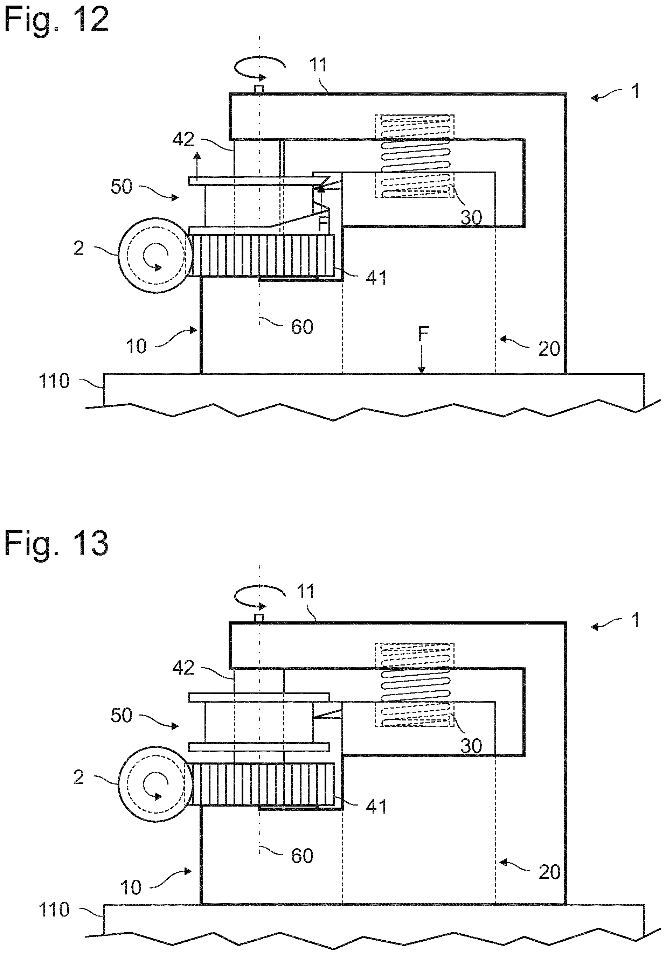

Wie in Figur 11 dargestellt, befindet sich die Nase 21 des Rastkörpers zunächst auf der oberen Freilauffläche 53. Anschließend wird die Schneckenwelle im Gegenuhrzeigersinn gedreht. Dadurch wird die Gegen-Hubleitfläche 24 in Richtung der Hubleitfläche 52 bewegt und durch die Federkraft der Vorspannfeder 30 in Richtung der unteren Freilauffläche 56 gedrückt. Nun ist es aber so, dass der Weg des Rastkörpers 20 in Richtung der Sperrposition P1 durch den Sperrkranz 110 versperrt wird. Ist der Rastkörper 20 in dieser Position angekommen, wird die Einlaufschräge 51 durch eine weitere Drehung der Leiteinheit 50 um die Drehachse 60 derart gegen die Gegen-Einlaufschräge 23 des Rastkörpers 20 gedrückt, dass dadurch die Leiteinheit 50 in Längsrichtung der Drehachse 60 zur Getriebeeinheit 40 relativ verschoben wird. Die Leiteinheit 50 wird in diesem Fall, wie in Figur 13 dargestellt, nach oben in Richtung des ersten Schenkels 11 verschoben. Anschließend kann die Nase 21 des Rastkörpers 20 entlang der mittleren Freilauffläche 59 bis zu einem Abbremsen der Schneckenwelle 2 bzw. des zugehörigen Antriebs geführt werden.

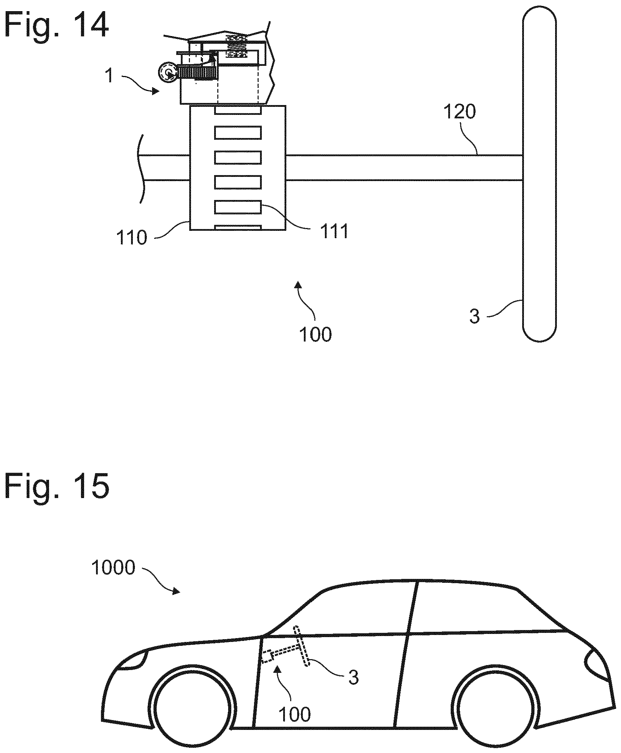

In Figur 14 ist eine Lenksäule 100 für das Fahrzeug 1000 mit einer erfindungsgemäßen Sperrvorrichtung 1 dargestellt. Die Lenksäule 100 weist neben der Sperrvorrichtung 1 noch einen Sperrkranz 110 und eine Lenkstange 120 auf. Der Sperrkranz 110 weist mehrere Sperrkranznuten 111 auf. Außerdem ist in Figur 14 ein Lenkrad 3 für die Lenksäule 100 dargestellt.

Figur 15 zeigt ein Fahrzeug 1000 mit einer erfindungsgemäßen Lenksäule 100 und dem Lenkrad 3.

### Bezugszeichenliste

- 1: Sperrvorrichtung
- 2: Schneckenwelle
- 3: Lenkrad

- 10: Grundkörper
- 11: erster Schenkel
- 12: zweiter Schenkel
- 20: Rastkörper
- 21: Nase
- 22: Rastabschnitt
- 23: Gegen-Einlaufschräge
- 24: Gegen-Hubleitfläche
- 24a: Endabschnitt
- 25: Gleitabschnitt
- 26: Stirnseite
- 30: Vorspannfeder
- 40: Getriebeeinheit
- 41: Zahnradabschnitt
- 42: Zapfenabschnitt
- 50: Leiteinheit
- 51: Einlaufschräge
- 51a: Endabschnitt der Einlaufschräge
- 52: Hubleitfläche
- 52a: Endabschnitt der Hubleitfläche
- 53: obere Freilauffläche
- 54: Umfangsflächenabschnitt
- 55: Durchgangsöffnung
- 56: untere Freilauffläche
- 57: oberer Kragenabschnitt
- 58: unterer Kragenabschnitt
- 59: mittlere Freilauffläche
- 60: Drehachse

- 100: Lenksäule
- 110: Sperrkranz
- 111: Sperrkranznut
- 120: Lenkradstange

- 1000: Fahrzeug

- F: Kraft, insbesondere auf 20
- P1: Sperrposition
- P2: Freigabeposition

## Patentansprüche

1. Sperrvorrichtung (1) zum Verriegeln einer Lenksäule (100) eines Fahrzeugs (1000), aufweisend
einen Grundkörper (10),
einen Rastkörper (20), der zum Verriegeln der Lenksäule (100) in eine Sperrkranznut (111) eines Sperrkranzes (110) der Lenksäule (100) bewegbar ist, wobei der Rastkörper (20) in dem Grundkörper (10) über eine Betätigungsbewegung in eine Sperrposition (P1) zum Verriegeln der Lenksäule (100) und in eine Freigabeposition (P2) zum Freigeben der Lenksäule (100) bewegbar gelagert ist,
eine Vorspannfeder (30), die den Rastkörper (20) in Richtung der Sperrposition (P1) mit einer Federkraft beaufschlagt,
eine Getriebeeinheit (40) und
eine Leiteinheit (50), die koaxial um eine Drehachse (60) drehbar gelagert sind, wobei die Getriebeeinheit (40) mit der Leiteinheit (50) rotationsfest verbunden ist und die Leiteinheit (50) mit dem Rastkörper (20) zum Erzeugen der Betätigungsbewegung wirkverbunden ist, wobei der Rastkörper (20) in direktem Kontakt zu der Leiteinheit (50) angeordnet ist, und
wobei die Leiteinheit (50) in Längsrichtung der Drehachse (60) zur Getriebeeinheit (40) relativ verschiebbar angeordnet ist.

2. Sperrvorrichtung (1) nach Anspruch 1,
**dadurch gekennzeichnet,**
**dass** die Leiteinheit (50) eine zumindest abschnittsweise umlaufende und dabei in Längsrichtung der Drehachse (60) ansteigende Hubleitfläche (52) aufweist,
die durch eine Drehung der Leiteinheit (50) um die Drehachse (60) zumindest abschnittsweise derart gegen eine Gegen-Hubleitfläche (24) des Rastkörpers (20) drückbar angeordnet ist, dass dadurch der Rastkörper (20) in die Freigabeposition (P2) bewegbar ist.

3. Sperrvorrichtung (1) nach Anspruch 1 oder 2,
**dadurch gekennzeichnet,**
**dass** die Gegen-Hubleitfläche (24) des Rastkörpers (20) in Längsrichtung der Drehachse (60) zumindest abschnittsweise eine Steigung aufweist.

4. Sperrvorrichtung (1) nach einem der voranstehenden Ansprüche,
**dadurch gekennzeichnet,**
**dass** die Gegen-Hubleitfläche (24), insbesondere in einem Endabschnitt (24a) der Gegen-Hubleitfläche (24), eine konvexe Krümmung aufweist.

5. Sperrvorrichtung (1) nach einem der voranstehenden Ansprüche,
**dadurch gekennzeichnet,**
**dass** die Hubleitfläche (52) die Leiteinheit (50) in einem Bereich zwischen 90° und 270°, bevorzugt in einem Bereich zwischen 150° und 200° umläuft.

6. Sperrvorrichtung (1) nach einem der voranstehenden Ansprüche,
**dadurch gekennzeichnet,**
**dass** die Leiteinheit (50) eine in Längsrichtung der Drehachse (60) ansteigende Einlaufschräge (51) aufweist,
wobei vorzugsweise der Rastkörper (20) in der Freigabeposition (P2) derart angeordnet ist, dass die Einlaufschräge (51) durch eine Drehung der Leiteinheit (50) um die Drehachse (60) gegen den Rastkörper (20), insbesondere gegen eine Gegen-Einlaufschräge (23) des Rastkörpers (20), kontaktierbar ist und dadurch die Leiteinheit (50) in Längsrichtung der Drehachse (60) zur Getriebeeinheit (40) relativ verschiebbar ist.

7. Sperrvorrichtung (1) nach einem der voranstehenden Ansprüche,
**dadurch gekennzeichnet,**
**dass** der Rastkörper (20) eine in Längsrichtung der Drehachse (60) ansteigende Gegen-Einlaufschräge (23) aufweist,
wobei vorzugsweise der Rastkörper (20) in der Freigabeposition (P2) derart angeordnet ist, dass die Gegen-Einlaufschräge (23) durch eine Drehung der Leiteinheit (50) um die Drehachse (60) gegen die Leiteinheit (50), insbesondere gegen eine Einlaufschräge (51), kontaktierbar ist und dadurch die Leiteinheit (50) in Längsrichtung der Drehachse (60) zur Getriebeeinheit (40) relativ verschiebbar ist.

8. Sperrvorrichtung (1) nach einem der voranstehenden Ansprüche,
**dadurch gekennzeichnet,**
**dass** der Rastkörper (20) einen Gleitabschnitt (25) aufweist, der, zumindest in der Sperrposition (P1), der Leiteinheit (50) zugewandt ist und eine komplementär oder im Wesentlichen komplementär zu einem mittleren Umfangsflächenabschnitt (54) der Leiteinheit (50) ausgestaltete konkave Krümmung aufweist.

9. Sperrvorrichtung (1) nach einem der voranstehenden Ansprüche,
**dadurch gekennzeichnet,**
**dass** die Hubleitfläche (52) in Umfangsrichtung der Leiteinheit (50) zwischen einer oberen Freilauffläche (53) und einer unteren Freilauffläche (56) der Leiteinheit (50) ausgestaltet ist, wobei die obere Freilauffläche (53) sowie die untere Freilauffläche (56) in Umfangsrichtung der Leiteinheit (50) jeweils in einer Ebene oder im Wesentlichen in einer Ebene verlaufen und zum Lagern eines Rastkörperabschnitts (21) ausgestaltet sind,
wobei insbesondere die obere Freilauffläche (53) und die untere Freilauffläche (56) jeweils über eine bevorzugte Länge von 150° bis 220° in Umfangsrichtung der Leiteinheit (50) ausgestaltet sind.

10. Sperrvorrichtung (1) nach einem der voranstehenden Ansprüche,
**dadurch gekennzeichnet,**
**dass** ein Endabschnitt (51a) der Einlaufschräge (51) und ein Endabschnitt (52a) der Hubleitfläche (52) jeweils an die obere Freifauffläche (53) angrenzen.

11. Sperrvorrichtung (1) nach einem der voranstehenden Ansprüche,
**dadurch gekennzeichnet,**
**dass** die Getriebeeinheit (40) einen Zapfenabschnitt (42) aufweist, der in einer komplementären Durchgangsöffnung (55) der Leiteinheit (50) angeordnet ist, wobei insbesondere der Zapfenabschnitt (42) einen kantigen oder elliptischen Querschnitt aufweist.

12. Sperrvorrichtung (1) nach einem der voranstehenden Ansprüche,
**dadurch gekennzeichnet,**
**dass** ein Spiel zwischen einem Zapfenabschnitt (42) der Getriebeeinheit (40) und einer Durchgangsöffnung (55) der Leiteinheit (50) in einem Bereich zwischen 0,5 und 0,05 mm, vorzugsweise zwischen 0,2 und 0,08 mm, liegt.

13. Sperrvorrichtung (1) nach einem der voranstehenden Ansprüche,
**dadurch gekennzeichnet,**
**dass** die Getriebeeinheit (40) ein Zahnrad (41) aufweist, das einstückig oder integral mit dem Zapfenabschnitt (42) ausgestaltet ist.

14. Lenksäule (100) für ein Fahrzeug (1000) mit einer Sperrvorrichtung (1) nach einem der voranstehenden Ansprüche.

## Claims

1. Locking device (1) for locking a steering column (100) of a vehicle (1000), comprising
a base body (10),
a detent body (20) movable into a locking rim groove (111) of a locking rim (110) of the steering column (100) for locking the steering column (100), wherein the detent body (20) is mounted in the base body (10) so as to be movable by means of an actuating movement into a locking position (P1) for locking the steering column (100) and into a release position (P2) for releasing the steering column (100),
a preload spring (30) which applies a spring force to the detent body (20) in the direction of the locking position (P1),
a gear unit (40) and
a guide unit (50) which are mounted coaxially so as to be rotatable about a rotary axis (60), wherein the gear unit (40) is connected to the guide unit (50) in a rotationally fixed manner and the guide unit (50) is operatively connected to the detent body (20) for generating the actuating movement,
wherein the detent body (20) is arranged in direct contact with the guide unit (50), and
wherein the guide unit (50) is arranged to be displaceable relative to the gear unit (40) in the longitudinal direction of the rotary axis (60).

2. Locking device (1) according to claim 1,
**characterized in**
**that** the guide unit (50) has a stroke guide surface (52) which runs around at least in sections and at the same time rises in the longitudinal direction of the rotary axis (60), which is arranged to be pressable against a counter-stroke guide surface (24) of the detent body (20) at least in sections by a rotation of the guide unit (50) about the rotary axis (60) in such a way that the detent body (20) can thereby be moved into the release position (P2).

3. Locking device (1) according to claim 1 or 2,
**characterized in**
**that** the counter-stroke guide surface (24) of the detent body (20) has an incline, at least in sections, in the longitudinal direction of the rotary axis (60).

4. Locking device (1) according to one of the preceding claims,
**characterized in**
**that** the counter-stroke guide surface (24), in particular in an end portion (24a) of the counter-stroke guide surface (24), has a convex curvature.

5. Locking device (1) according to one of the preceding claims,
**characterized in**
**that** the stroke guide surface (52) rotates the guide unit (50) in a range between 90° and 270°, preferably in a range between 150° and 200°.

6. Locking device (1) according to one of the preceding claims,
**characterized in**
**that** the guide unit (50) has an inlet bevel (51) rising in the longitudinal direction of the rotary axis (60),
wherein preferably the detent body (20) is arranged in the release position (P2) in such a way that the inlet bevel (51) is contactable by means of a rotation of the guide unit (50) around the rotary axis (60) against the detent body(20), in particular against the counter-inlet bevel (23) of the detent body (20), and thereby the guide unit (50) is displaceable relative to the gear unit (40) in the longitudinal direction of the rotary axis (60).

7. Locking device (1) according to one of the preceding claims,
**characterized in**
**that** the detent body (20) has a counter-inlet slope (23) rising in the longitudinal direction of the rotary axis (60),
wherein preferably the detent body (20) is arranged in the release position (P2) in such a way that the counter-inlet bevel (23) is contactable by means of a rotation of the guide unit (50) around the rotary axis (60) against the guide unit (50), in particular against an inlet bevel (51), and thereby the guide unit (50) is displaceable relative to the gear unit (40) in the longitudinal direction of the rotary axis (60).

8. Locking device (1) according to one of the preceding claims,
**characterized in**
**that** the detent body (20) has a sliding portion (25) which, at least in the locking position (P1), faces the guide unit (50) and has a concave curvature which is complementary or substantially complementary to a central circumferential surface portion (54) of the guide unit (50).

9. Locking device (1) according to one of the preceding claims,
**characterized in**
**that** the stroke guide surface (52) is configured in the circumferential direction of the guide unit (50) between an upper free running surface (53) and a lower free running surface (56) of the guide unit (50), the upper free running surface (53) and the lower free running surface (56) each running in a plane or essentially in a plane in the circumferential direction of the guide unit (50) and being configured for supporting a detent body section (21),
wherein in particular the upper free running surface (53) and the lower free running surface (56) are each designed over a preferred length of 150° to 220° in the circumferential direction of the guide unit (50).

10. Locking device (1) according to one of the preceding claims,
**characterized in**
**that** an end portion (51a) of the inlet bevel (51) and an end portion (52a) of the stroke guide surface (52) each adjoin the upper free running surface (53).

11. Locking device (1) according to one of the preceding claims,
**characterized in**
**that** the gear unit (40) has a pin portion (42) which is arranged in a complementary through opening (55) of the guide unit (50),
wherein in particular the pin portion (42) has an angular or elliptical cross-section.

12. Locking device (1) according to one of the preceding claims,
**characterized in**
**that** a play between a pin portion (42) of the gear unit (40) and a through opening (55) of the guide unit (50) is in a range between 0.5 and 0.05 mm, preferably between 0.2 and 0.08 mm.

13. Locking device (1) according to one of the preceding claims,
**characterized in**
**that** the gear unit (40) has a gear (41) which is formed integrally or in one piece with the pin portion (42).

14. Steering column (100) for a vehicle (1000) with a locking device (1) according to one of the preceding claims.

## Revendications

1. Dispositif de verrouillage (1) pour verrouiller une colonne de direction (100) d'un véhicule (1000), comprenant
un corps de base (10),
un corps d'arrêt (20) mobile dans une rainure (111) d'un couronne d'arrêt (110) de la colonne de direction (100) pour verrouiller la colonne de direction (100),
dans lequel le corps d'arrêt (20) est monté dans le corps de base (10) de manière à pouvoir être déplacé au moyen d'un mouvement d'actionnement dans une position de verrouillage (P1) pour verrouiller la colonne de direction (100) et dans une position de libération (P2) pour libérer la colonne de direction (100),
un ressort de précontrainte (30) qui applique une force de ressort au corps d'arrêt (20) dans la direction de la position de verrouillage (P1),
un unité de transmission (40) et
une unité de guidage (50) qui sont montées coaxialement de manière à pouvoir tourner autour d'un axe de rotation (60),
dans lequel l'unité de transmission (40) est reliée à l'unité de guidage (50) de manière à ne pas pouvoir tourner et l'unité de guidage (50) est reliée de manière opérationnelle au corps d'arrêt (20) pour générer le mouvement d'actionnement,
dans lequel le corps d'arrêt (20) est disposé en contact direct avec l'unité de guidage (50), et
dans lequel l'unité de guidage (50) est disposée de manière à pouvoir être déplacée par rapport à l'unité de transmission (40) dans la direction longitudinale de l'axe de rotation (60).

2. Dispositif de verrouillage (1) selon la revendication 1,
**caractérise en ce**
**que** l'unité de guidage (50) présente une surface de guidage de la course (52) qui tourne au moins par sections et qui monte en même temps dans la direction longitudinale de l'axe de rotation (60),
qui est agencé pour être pressé contre une surface de guidage de contre-course(24) du corps d'arrêt (20) au moins par sections par une rotation de l'unité de guidage (50) autour de l'axe de rotation (60) de telle sorte que le corps d'arrêt (20) puisse ainsi être déplacé dans la position de libération (P2).

3. Dispositif de verrouillage (1) selon la revendication 1 ou 2,
**caractérise en ce**
**que** la surface de guidage de contre-course (24) du corps d'arrêt (20), qui se soulève en sens inverse, présente une inclinaison, au moins par sections, dans la direction longitudinale de l'axe de rotation (60).

4. Dispositif de verrouillage (1) selon l'une des revendications précédentes,
**caractérise en ce**
**que** la surface de guidage de contre-course (24), en particulier dans une partie d'extrémité (24a) de la surface de guidage de contre-course (24), présente une courbure convexe.

5. Dispositif de verrouillage (1) selon l'une des revendications précédentes,
**caractérise en ce**
**que** la surface de guidage de la course (52) fait tourner l'unité de guidage (50) dans une plage comprise entre 90° et 270°, de préférence dans une plage comprise entre 150° et 200°.

6. Dispositif de verrouillage (1) selon l'une des revendications précédentes,
**caractérise en ce**
**que** l'unité de guidage (50) présente un biseau d'entrée (51) qui monte dans le sens longitudinal de l'axe de rotation (60),
le corps d'arrêt (20) étant de préférence disposé en position de libération (P2) de telle sorte que le biseau d'entrée (51) puisse être mis en contact par une rotation de l'unité de guidage (50) autour l'axe de rotation (60) contre le corps d'arrêt (20), en particulier contre un contre-biseau d'entrée (23) du corps d'arrêt (20), et que l'unité de guidage (50) puisse ainsi être déplacée par rapport au unité de transmission (40) dans la direction longitudinale de l'axe de rotation (60).

7. Dispositif de verrouillage (1) selon l'une des revendications précédentes,
**caractérise en ce**
**que** le corps d'arrêt (20) présente une contre-biseau d'entrée (23) qui monte dans la direction longitudinale de l'axe de rotation (60),
le corps d'arrêt (20) étant de préférence disposé en position de libération (P2) de telle sorte que le contre-biseau d'entrée (23) puisse être mis en contact par une rotation de l'unité de guidage (50) autour de l'axe de rotation (60) contre le corps d'arrêt (20), en particulier contre un biseau d'entrée (51), et que l'unité de guidage (50) puisse ainsi être déplacée par rapport au unité de transmission (40) dans la direction longitudinale de l'axe de rotation (60).

8. Dispositif de verrouillage (1) selon l'une des revendications précédentes,
**caractérise en ce**
**que** le corps d'arrêt (20) présente une partie coulissante (25) qui, au moins dans la position de verrouillage (P1), est tournée vers l'unité de guidage (50) et présente une courbure concave qui est complémentaire ou sensiblement complémentaire d'une partie de surface circonférentielle centrale (54) de l'unité de guidage (50).

9. Dispositif de verrouillage (1) selon l'une des revendications précédentes,
**caractérise en ce**
**que** la surface de guidage de la course (52) est configurée dans la direction circonférentielle de l'unité de guidage (50) entre une surface supérieure de roue libre (53) et une surface inférieure de roue libre (56) de l'unité de guidage (50), la surface supérieure de roue libre (53) et la surface inférieure de roue libre (56) s'étendant chacune dans un plan ou essentiellement dans un plan dans la direction circonférentielle de l'unité de guidage (50) et étant configurées pour supporter une section de corps de verrouillage (21),
dans lequel en particulier la surface supérieure de la roue libre (53) et la surface inférieure de la roue libre (56) sont chacune conçues sur une longueur préférentielle de 150° à 220° dans la direction circonférentielle de l'unité de guidage (50).

10. Dispositif de verrouillage (1) selon l'une des revendications précédentes,
**caractérise en ce**
**qu'**une partie d'extrémité (51a) du biseau d'entrée (51) et une partie d'extrémité (52a) de la surface de guidage de la course (52) sont chacune contiguës à la surface supérieure de la roue libre (53).

11. Dispositif de verrouillage (1) selon l'une des revendications précédentes,
**caractérise en ce**
**que** l'unité de transmission (40) comporte une partie de broche (42) qui est disposée dans une ouverture de passage complémentaire (55) de l'unité de guidage (50),
dans lequel en particulier la partie du journal (42) a une section transversale angulaire ou elliptique.

12. Dispositif de verrouillage (1) selon l'une des revendications précédentes,
**caractérise en ce**
**qu'**un jeu entre une partie du journal (42) de l'unité de transmission (40) et une ouverture traversante (55) de l'unité de guidage (50) est compris entre 0,5 et 0,05 mm, de préférence entre 0,2 et 0,08 mm.

13. Dispositif de verrouillage (1) selon l'une des revendications précédentes,
**caractérise en ce**
**que** l'unité de transmission (40) comporte une roue dentée (41) qui est formée d'un seul tenant ou d'une seule pièce avec la partie du journal (42).

14. Colonne de direction (100) d'un véhicule (1000) avec un dispositif de verrouillage (1) selon l'une des revendications précédentes.
